# EUROPEAN PATENT SPECIFICATION

(11) **EP 1 849 725 B1**
(45) Date of publication and mention of the grant of the patent: **05.11.2008**
(21) Application number: 06112987.0
(22) Date of filing: 24.04.2006
(51) Int. Cl.: B65G 47/51

(54) **A conveyor for transporting and accumulating discrete products**
Förderer zum Transport und Aufstauen von einzelnen Produkten
Conveyeur pour transporter et accumuler des produits individuels

(43) Date of publication of application: 31.10.2007
(73) Proprietor: Specialty Conveyor B.V., 1396 JK - Baambrugge (NL)
(72) Inventor: Balk, Wouter, 1396 JK Baambrugge (NL); Broers, Johannes Wilhelmus, 1696 AE Oosterblokker (NL)
(74) Representative: Metman, Karel Johannes

(56) References cited:
- WO-A-20/06040058
- US-B1- 6 612 420
- US-B2- 6 725 998

## Description

The present invention relates to a conveyor for transporting and accumulating discrete products between an inlet and an outlet. It comprises a first conveying means running from the inlet in a first direction and being drivable with a first speed, and a second conveying means running in a second opposite direction to the outlet and being drivable with a second speed. The first and second conveying means extend at least partly substantially parallel to each other. Particularly, it comprises a mobile transfer member for transferring products between the first and second conveying means, the transfer member being operatively coupled to the first ands second conveying means in order to run at a speed which depends on the speed of the first and second conveying means.

Conveyors of this type are known in the art, for example from US 6,725,998 B2. This document discloses various embodiments for driving the transfer member and possibly also the product guide, see in particular Figs. 13-16. WO 2006/040058 also shows conveyors of this type, according to the preamble of claim 1.

An object of the present invention is to provide a conveyor having a simple and effective drive for a transfer member and its guide.

For obtaining this object, the transfer member of the conveyor according to the invention comprises a drivable guide for guiding and moving products during their transfer, said guide comprising a transmission in driven engagement with only one of said first and second conveying means.

According to the invention, the drive for the transfer member and the drive for the guide are separated. The transfer member is driven either by an endless transmission member which is operatively coupled to the first and second conveying means and/or through a stationary drive, while the guide is in the driven engagement with only one of said first and second conveying means.

The drive of the transfer member through an endless transmission member and/or through a stationary drive leads to a smooth drive, while the drive of the guide by the engagement with only one said fist and second conveying means can be very simple. The driving speed of the guide is than only dependent on the speed difference between the transfer member and the respective conveying means and the transmission ratio can be selected such that a smooth transfer of products is obtained.

One embodiment of the drive for the guide is that in which the conveying means comprises an upper and lower surface and the transmission being engagement with at least one of the said of upper and lower surfaces, and preferably with the conveying surface, for example through a friction wheel which is in frictional engagement with said conveying surface.

This transmission through one of the surfaces of the conveying means is very simple, especially if the conveying surface is used in combination with a friction wheel, because the conveying means then hardly needs any adaptations to drive the guide.

The endless transmission member for the transfer member may for example be a conveyor belt filling the gap between the first and second convening means. Furthermore, the endless transmission member may be driven by a stationary differential gear which is in engagement with the first and second conveying means. This is the most simple manner of driving the transfer member in dependence of the speed of the first and second conveying means.

Preferably, the first and second conveying means are at least partly guided in a helical path.

This arrangement leads to a large accumulating length on a relatively limited floor space. The drive means according to the invention is especially useful here as the eclectic drive of the transfer member and guide is mechanically complex due to the helix shape of the conveyor means.

Further advantages and details of the invention appear from the following description of a preferred embodiment of the invention with referenced to the accompanying drawings.

In the drawings:
Fig. 1 is a very schematic side view of the embodiment of the conveyor according to the invention.
Fig. 2, 3 and 4 are enlarged plan views of the conveying means of the conveyor of Fig. 1, illustrating the variation of the buffer capacity through the displacement of a transfer member.
Fig. 5 is an enlarged perspective view of the transfer member and guide in engagement with the adjacent conveying means.
Fig. 6 is an enlarged perspective view of the separated transfer member and guide, with cover parts removed for the sake of clarity.
Fig. 7 is a cross section according to the line VII-VII in Fig. 6.
Fig. 8 is a very schematic plan view of a part of an alternative embodiment of the conveyor according of the invention.
Fig. 9 is a plan view of a further alternative embodiment of the conveyor according to the invention.

The drawings show a conveyor for transporting and accumulating products. Said buffering generally takes place in a processing line in which the products are subjected to various processing or treatment steps at different locations, and in which temporary differences in the processing rates at said locations must be set off. The products may consist of containers, for example, in particular containers such as bottles, cans, pots, cartons and the like, but many other discrete products, such as cigarettes are conceivable. In the case of bottles or cartons the processing line consist of a filling line for filling the containers in question, such as a bottling line for filling the bottles with a beverage. The buffering device may be arranged between a depalletising station and a washing and/or filling station, between the filling station and a labelling station and between the labelling station and a packaging station, for examples. Also other fields of application are conceivable, of course.

The conveyor as shown comprises a frame, in this embodiment having a central column 1 with a base 2 and a helical guide chute 3 extending around the column and being attached thereto. Also all kinds of other frame constructions are conceivable, of course. An end roller is disposed at the lower end 4 and the upper end 5 of the guide chute, and a return chute 6 of the frame extends between said ends of the helical guide chute 3. With the device according to the invention, the guide chute 3 and the return chute 6 support a first conveyor belt 7 and a second conveyor belt 8. The conveying part and the return part of the two conveyor belts 7, 8 move along different paths. It is also conceivable to use an embodiment in which the return part is led back along the bottom side of the guide chute 3 for the conveying part.

Several embodiments of the first and second conveyor belts 7, 8 are possible, as long as a preferably more or less closed conveying surface is obtained. Examples of such conveyor belts are lamella or slat belts, link belts, stainless steel lamella chains, textile belts, PVC belts, stainless steel belts and the like, which latter belt types are generally only suitable for use in a straight, i.e. non-curved conveying path. The invention also extends to devices comprising straight conveying paths, however.

In the illustrated embodiment the helical chute 3 comprises eight windings, but it is possible to use a larger or a smaller number, depending on the application in question. By using guide rollers on the conveyor belts 7, 8, for example, the conveyor belts can be driven over a large number of windings without any driving problems. The two conveyor belts 7, 8 each have their own driving motor 9, 10, which motors are disposed near the upper end roller 5 in this case and which engage the associated conveyor belt 7, 8. The two conveyor belts 7, 8 can be driven independently of each other, in opposite directions in the present case, i.e. products are conveyed upwards from an inlet at the lower end 4 over the conveying surface of the first conveyor belt 7 as indicated by the arrow P₁, and downwards again over the conveying surface of the second conveyor belt 8 (see arrow P₂) to an outlet at the lower end 4. At the location indicated by the arrow P₁,₂, the products are transferred from the conveying surface of the first conveyor belt 7 to the conveying surface of the second conveyor belt 8, by means of a transfer member 11.

The transfer member 11 is mobile within the conveyor. In this case, the transfer member 11 is mounted on an endless transmission member, here a conveyor belt 12 which is guided in a path extending at least partially parallel to the first and second conveyor belts 7 and 8, and in this case extending within the gap between these conveyor belts 7 and 8, which extend parallel to and substantially flush with each other. In the embodiment as shown, there are also two idle belts 13 and 14, one on either side of the transmission conveyor belt 12, but these belts could be dispensed with, so that the transmission conveyor belt 12 is positioned directly adjacent the first and second conveyor belts 7 and 8. It would also be possible that the endless transmission member is guided at the position above the first and second conveyor belts 7 and 8, which then could run next to each other without or hardly without any gap between them. The transfer member 11 includes in this case a platform which is accommodated a

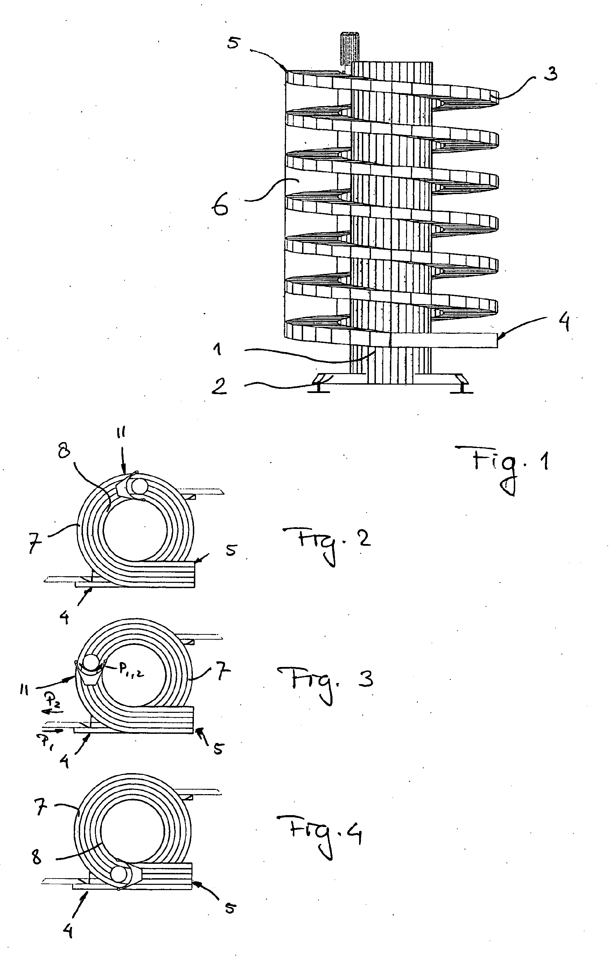

The position of the transfer member 11 is dependent on the required buffer capacity between the inlet and outlet of the conveyor. If the speed of the supplying first conveyor belt 7 is higher than that of the discharging second conveyor belt 8, than the surplus of supplied products should be accumulated in the conveyor and in that case, the transfer member 11 should travel away from the inlet of the conveyor in order to accumulate more products on the conveyor (see Figs. 2 - 4). On the other hand, if the speed of the supplying first conveyor belt 7 is lower than that of the discharging second conveyer belt 8, the transfer member 11 should move in the direction towards the outlet in order to supply the outlet with accumulated products. In practice, the conveyor may accumulate a number of products which is sufficient for 5 to 15 minutes of accumulation, for example, and this time is generally sufficient to restore the balance between the inlet and outlet speed.

In order to make the speed and position of the transfer member 11 dependent on the speed of the first and second conveyor belts 7, 8, the transmission conveyor belt 12 of the transfer member 11 is coupled to the first and second conveyor belts 7, 8, or the drive thereof. In this case, there is a differential gear provided, including a planetary wheel assembly. The transmission ratio is preferably such that the drive speed of the transmission conveyor belt 12 is half the speed difference of the first and second conveyor belts 7, 8 (in opposite directions).

In the present embodiment, the transmission conveyor belt 12 has no separate drive motor. However, in principle it would also be possible to have a separate drive motor for the transmission conveyor belt, which is controlled in dependence of the (measured) speed of the drive motors of the first and second conveyor belts 7, 8. The control may be electronically, optically, mechanically or the like or a combination thereof. The transmission conveyor belt 12 may be replaced by another endless transmission member, such as a chain or the like.

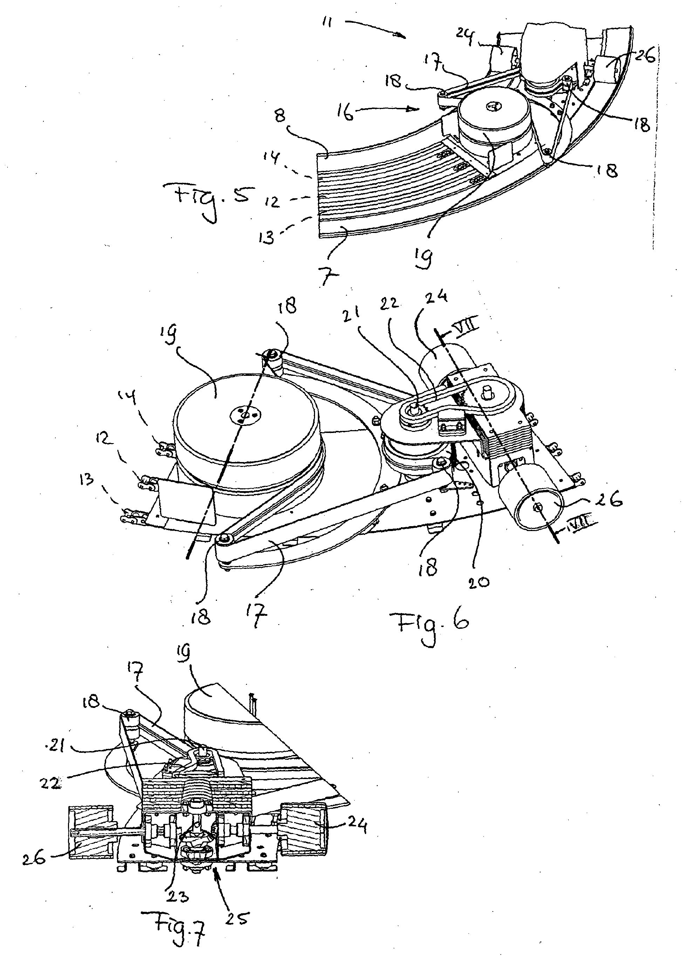

Figs. 5 and 6 show the transfer member 11 in more detail. A guide 16 that is provided on the transfer member 11 is driveable, i.e. movable so as to guide the products from the first conveyor belt 7 to the second conveyor belt 8 in an active manner. Such a movement may be a circulating movement in a direction from the first conveyor belt 7 to the second conveyor belt 8. For example, the guide 16 includes a belt 17 guided by rollers 18. In this case, the guide 16 also includes a guide wheel 19 positioned opposite to the belt 17 such that the belt is tensioned against the wheel 19. The belt 17 may be tensioned by one of the rollers 18 which is movable and biased by a spring member. The vertical axis of the wheel 19 is positioned substantially between two of the rollers 18. The circumference of the wheel 19 may be elastic. The guide wheel 19 may be driven in synchronisation with the belt 17 or may be idle so as to rotate together with the belt.

The belt 17 is toothed so as to be drivable by a toothed belt wheel 20 and so as to have some grip on the products to be transferred from the first 7 to the second conveyor belt 8 between the guide belt 17 and the guide wheel 19. This guide 16 is thus especially suitable for applications in which the products are conveyed one behind the other on a first-in first-out principle. The conveyor according to the invention would also be suitable for buffering products which are conveyed in a mass stream. The guide wheel would then be left out, and the guide belt or other guide would then be conceived to function on its own.

The shaft 21 of the belt wheel 20 carries a sprocket wheel engaged by a drive chain 22 also engaging a sprocket on a drive shaft 23. The drive shaft is coupled with the axis of a friction wheel 24 through a right-angled gear assembly 25. The friction wheel 24 runs on the upper conveying surface of the second conveyor belt 8. Thus, the friction wheel, and therefore the guide belt 17 is driven if there is a speed difference between the transfer member 11 and the second conveyor belt 8. Alternatively, it would have been possible to drive the guide member 17 through an engagement with the first conveyor belt. In that case, the engagement would have been provided through the friction wheel 26, which is now idle and only acts as a support wheel.

Other drive arrangements for the guide member 17 are conceivable, for example through a toothed wheel engagement, which is for example rotatable around a vertical axis and engaging teeth on the side of one of the conveyor belts 7, 8. In this case there is no need for a right-angled transmission.

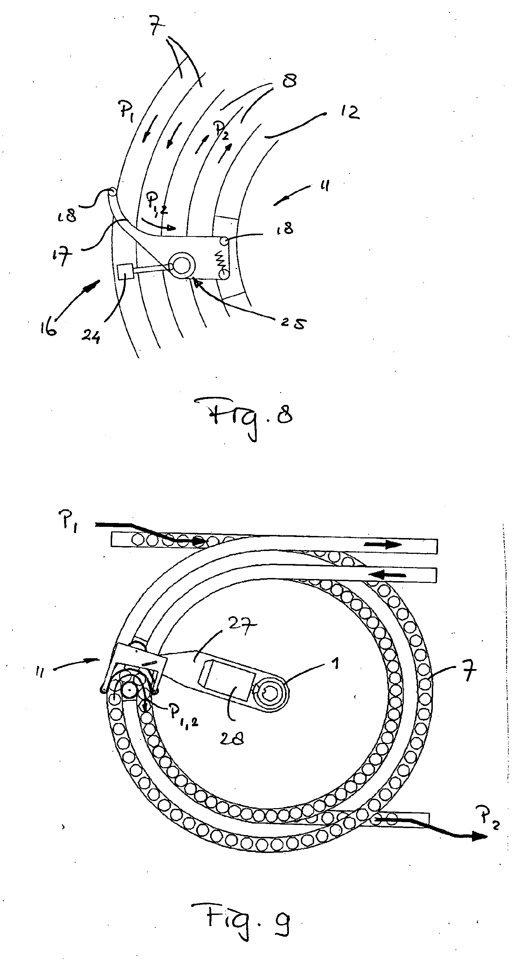

Fig. 8 very schematically shows an alternative embodiment of a conveyor and transfer member. The conveyor comprises first and second conveying means 7 and 8 which each include two adjacent conveyor belts. The conveying means 7 and 8 are positioned directly adjacent each other. The transfer member 11 is attached to an endless transmission member in the form of a transmission conveyor belt 12 which is arranged on the side of the second conveying means 8 opposite to the first conveying means 7. This arrangement is particularly suited to transport and accumulate products conveyed in mass flow. The guide comprises a tensioned endless guide member, such as a belt, chain or the like guided by tabs or the like to follow a desired track. This guide member 17 is driven by a friction wheel which is in engagement with one of the belts of the first conveying means 7.

An alternative embodiment of the conveyor according to the invention is shown in Fig. 9. In this embodiment, the endless transmission member is replaced by another drive. For example, the transfer member 11 may be suspended from an arm 27 which is coupled to the column 1 or a part which is rotatable around the column 1 which is coaxial with the axis of the helical shape of the conveying means 7 and 8. In that case, the transfer member 11 could be moved through a rotation of said arm in combination with a vertical movement of the transfer member so as to follow the helical path of the first and second conveyor belts 7, 8. This vertical movement could be accomplished by the arm with respect to column 1 or by a suspension means between the arm and the transfer member 11. A drive motor 28 of the arm 27 is then again synchronised with the drive of the first and second conveyor belts 7, 8.

It will be apparent from the foregoing that the invention provides a simple and reliable conveyor for accumulating products.

The invention is not limited to the embodiments as described above and illustrated in the drawing, which can be varied in several ways within the scope of the invention. For example, the first and second conveyors may have different shapes and may extend in either horizontal and/or vertical direction and in a straight path or with (continuous) bends in one or two directions. For example, the "helical" conveyor may also include conveyors which are oval in plan view, or having another plan view shape differing from a circle. The idle belts 13 and/or 14 may be provided with product guides along their sides adjacent the respective conveyor belts 7, 8. Also the conveyor belts may be provided with product guides along their sides facing away from the idle belts 13, 14, or transmission conveyor belt 12.

## Claims

1. A conveyor for transporting and accumulating discrete products between an inlet and an outlet, comprising a first conveying means (7) running from the inlet in a first direction and being drivable with a first speed and a second conveying means (8) running in a second opposite direction to the outlet and being drivable with a second speed, said first and second conveying means extending at least partly substantially parallel to each other, and further comprising a mobile transfer member (11) for transferring products between the first and second conveying means, said transfer member being connected to an endless transmission member (12) which is operatively coupled to the first ands second conveying means in order to run at a speed which depends on the speed of the first and second conveying means, said transfer member comprising a drivable guide (16) for guiding and moving products during their transfer, **characterised in that** said guide further comprises a transmission (20 - 25) in driven engagement with only one of said first and second conveying means (7, 8).

2. A conveyor as claimed in claim 1, wherein the conveying means (7; 8) comprises an upper and lower surface, the transmission (20 - 25) being in engagement with at least one of said upper and lower surfaces.

3. A conveyor as claimed in claim 2, wherein the conveying means (7; 8) comprises an upper conveying surface adapted to support and convey the products, said transmission including a friction wheel (24) which is in frictional engagement with the conveying surface.

4. A conveyor as claimed in claim 3, wherein the transmission (20 - 25) includes a right-angled transmission mechanism, such as a crown gear assembly (25).

5. A conveyor as claimed in any of the preceding claims, wherein the guide (16) includes a guide belt (17) running around substantially vertical axes (18), and preferably also a guide wheel (19) positioned oppositely to the belt in order to guide the products between the belt and the wheel.

6. A conveyor as claimed in any one of the preceding claims, wherein the first and second conveying means (7, 8) includes slat conveyors.

7. A conveyor as claimed in any one of the preceding claims, wherein the first and second conveying means (7, 8) are at least partly guided in a helical path.

8. A conveyor as claimed in any one of the preceding claims, wherein the endless transmission member (12) is driven by a stationary differential gear which is in engagement with the first and second conveying means (7, 8).

9. A conveyor as claimed in any of the preceding claims, wherein the endless transmission member (12) includes a conveyor belt.

10. A conveyor as claimed in claim 9, wherein the conveyor belt of the endless transmission member (12) includes a product guide at least on one longitudinal side adjacent the adjoining conveying means.

11. A conveyor for transporting and accumulating discrete products between an inlet and an outlet, comprising a first conveying means (7) running from the inlet in a first direction and being drivable with a first speed and a second conveying means (8) running in a second opposite direction to the outlet and being drivable with a second speed, said first and second conveying means extending at least partly substantially parallel to each other, and further comprising a mobile transfer member (11) for transferring products between the first and second conveying means, **characterised in that** said transfer member is connected to a stationary drive (27, 28) which is operatively coupled to the first ands second conveying means in order to run at a speed which depends on the speed of the first and second conveying means, said transfer member comprising a drivable guide (16) for guiding and moving products during their transfer, said guide comprising a transmission (20 - 25) in driven engagement with only one of said first and second conveying means.

12. A conveyor as claimed in claim 11, wherein the first and second conveying means (7, 8) are at least partly guided in a helical path around a frame column (1) coaxial with the helical path of the first and second conveying means, the stationary drive including an arm (27) rotatably connected to the column (1) and being drivable by a motor (28).

## Patentansprüche

1. Förderer zum Transport und Aufstauen von einzelnen Produkten zwischen einem Einlass und einem Auslass, welcher ein erstes Fördermittel (7), welches von dem Einlass aus in eine erste Richtung verläuft und mit einer ersten Geschwindigkeit antreibbar ist, und ein zweites Fördermittel (8), welches in eine zweite, entgegengesetzte Richtung zu dem Auslass verläuft und mit einer zweiten Geschwindigkeit antreibbar ist, wobei sich das erste und zweite Fördermittel zumindest teilweise im Wesentlichen parallel zueinander erstrecken, enthält, und welcher ferner ein Mobilüberführungsteil (11) zum Überführen von Produkten zwischen dem ersten und zweiten Fördermittel enthält, wobei das Überführungsteil mit einem Endlos-Übertragungsteil (12) verbunden ist, welches wirksam an das erste und zweite Fördermittel gekoppelt ist, um bei einer Geschwindigkeit zu laufen, welche von der Geschwindigkeit von dem ersten und zweiten Fördermittel abhängt, wobei das Überführungsteil eine antreibbare Führung (16) enthält, um Produkte während ihrer Überführung zu führen und zu bewegen, **dadurch gekennzeichnet, dass** die Führung ferner einen Antrieb (20-25) enthält, welcher in einer angetriebenen Ineingriffnahme mit lediglich einem aus dem ersten und zweiten Fördermittel (7, 8) steht.

2. Förderer nach Anspruch 1, bei welchem das Fördermittel (7; 8) eine obere und eine untere Oberfläche enthält, wobei der Antrieb (20-25) mit zumindest einer aus der oberen und unteren Oberfläche in Eingriff steht.

3. Förderer nach Anspruch 2, bei welchem das Fördermittel (7; 8) eine obere Förderoberfläche enthält, welche dazu ausgelegt ist, um die Produkte zu halten und zu fördern, wobei der Antrieb ein Reibrad (24) enthält, welches mit der Förderoberfläche in einer Reib-Ineingriffnahme steht.

4. Förderer nach Anspruch 3, bei welchem der Antrieb (20-25) einen rechtwinkligen Antriebsmechanismus enthält, wie beispielsweise einen Zahnkranzbausatz (25).

5. Förderer nach einem der vorangehenden Ansprüche, bei welchem die Führung (16) einen Führungsriemen (17), welcher um im Wesentlichen vertikale Achsen (18) verläuft, und vorzugsweise ebenfalls ein Führungsrad (19), welches entgegengesetzt zum Riemen positioniert ist, enthält, um die Produkte zwischen dem Riemen und dem Rad zu führen.

6. Förderer nach einem der vorangehenden Ansprüche, bei welchem das erste und zweite Fördermittel (7, 8) Stabförderer enthalten.

7. Förderer nach einem der vorangehenden Ansprüche, bei welchem das erste und zweite Fördermittel (7, 8) zumindest teilweise in einem spiralförmigen Pfad geführt sind.

8. Förderer nach einem der vorangehenden Ansprüche, bei welchem das Endlos-Übertragungsteil (12) durch ein stationäres Differenzialgetriebe angetrieben ist, welches mit dem ersten und zweiten Fördermittel (7, 8) in Eingriff steht.

9. Förderer nach einem der vorangehenden Ansprüche, bei welchem das Endlos-Übertragungsteil (12) einen Förderriemen enthält.

10. Förderer nach Anspruch 9, bei welchem der Förderriemen von dem Endlos-Übertragungsteil (12) zumindest an einer Längsseite angrenzend zum anstoßenden Fördermittel eine Produktführung enthält.

11. Förderer zum Transport und Aufstauen von einzelnen Produkten zwischen einem Einlass und einem Auslass, welcher ein erstes Fördermittel (7), welches von dem Einlass aus in eine erste Richtung verläuft und mit einer ersten Geschwindigkeit antreibbar ist, und ein zweites Fördermittel (8), welches in eine zweite, entgegengesetzte Richtung zu dem Auslass verläuft und mit einer zweiten Geschwindigkeit antreibbar ist, wobei sich das erste und zweite Fördermittel zumindest teilweise im Wesentlichen parallel zueinander erstrecken, enthält, und welcher ferner ein Mobilüberführungsteil (11) zum Überführen von Produkten zwischen dem ersten und zweiten Fördermittel enthält, **dadurch gekennzeichnet, dass** das Überführungsteil mit einem stationären Antrieb (27, 28) verbunden ist, welcher wirksam an dem ersten und zweiten Fördermittel gekoppelt ist, um bei einer Geschwindigkeit zu laufen, welche von der Geschwindigkeit von dem ersten und zweiten Fördermittel abhängt, wobei das Überführungsteil eine antreibbare Führung (16) enthält, um Produkte während ihrer Überführung zu führen und zu bewegen, wobei die Führung einen Antrieb (20-25) in einer angetriebenen Ineingriffnahme mit lediglich einem von dem ersten und zweiten Fördermittel enthält.

12. Förderer nach Anspruch 11, bei welchem das erste und zweite Fördermittel (7, 8) zumindest teilweise in einem spiralförmigen Pfad um eine Rahmensäule (1) geführt sind, welche zu dem spiralförmigen Pfad von dem ersten und zweiten Fördermittel koaxial ist, wobei der stationäre Antrieb einen Ausleger (27) enthält, welcher drehbar an der Säule (1) verbunden ist und durch einen Motor (28) antreibbar ist.

## Revendications

1. Convoyeur pour transporter et accumuler des produits distincts entre une entrée et une sortie, comprenant un premier moyen de transport (7) se déplaçant à partir de l'entrée dans une première direction et étant entraînable avec une première vitesse et un second moyen de transport (8) se déplaçant dans une seconde direction opposée à la sortie et étant entraînable avec une seconde vitesse, lesdits premier et second moyens de transport s'étendant, au moins partiellement, de façon sensiblement parallèle l'un à l'autre, et comprenant en outre un élément de transfert mobile (11) pour transférer des produits entre les premier et second moyens de transport, ledit élément de transfert étant connecté à un élément de transmission sans fin (12) qui est couplé de façon opérationnelle aux premier et second moyens de transport afin de se déplacer à une vitesse qui dépend de la vitesse des premier et second moyens de transport, ledit élément de transfert comprenant un guidage entraînable (16) pour guider et déplacer des produits au cours de leur transfert, **caractérisé en ce que** ledit guidage comprend en outre une transmission (20 à 25) en prise entraînée avec seulement un desdits premier et second moyens de transport (7, 8).

2. Convoyeur selon la revendication 1, dans lequel les moyens de transport (7 ; 8) comprennent des surfaces supérieure ou inférieure, la transmission (20 à 25) étant en prise avec au moins une desdites surfaces supérieure ou inférieure.

3. Convoyeur selon la revendication 2, dans lequel les moyens de transport (7 ; 8) comprennent une surface de transport supérieure adaptée pour supporter et transporter les produits, ladite transmission comprenant une roue de friction (24) qui est en prise de friction avec la surface de transport.

4. Convoyeur selon la revendication 3, dans lequel la transmission (20 à 25) comprend un mécanisme de transmission à angle droit, tel qu'un assemblage de roue conique plane (25).

5. Convoyeur selon l'une quelconque des revendications précédentes, dans lequel le guidage (16) comprend une courroie de guidage (17) se déplaçant autour d'axes sensiblement verticaux (18), et de préférence également une roue de guidage (19) positionnée de façon opposée à la courroie afin de guider les produits entre la courroie et la roue.

6. Convoyeur selon l'une quelconque des revendications précédentes, dans lequel les premier et second moyens de transport (7, 8) comprennent des convoyeurs à tablier à lattes.

7. Convoyeur selon l'une quelconque des revendications précédentes, dans lequel les premier et second moyens de transport (7, 8) sont au moins partiellement guidés dans un passage hélicoïdal.

8. Convoyeur selon l'une quelconque des revendications précédentes, dans lequel l'élément de transmission sans fin (12) est entraîné par un engrenage différentiel stationnaire qui est en prise avec les premier et second moyens de transport (7, 8).

9. Convoyeur selon l'une quelconque des revendications précédentes, dans lequel l'élément de transmission sans fin (12) comprend une courroie de transport.

10. Convoyeur selon la revendication 9, dans lequel la courroie de transport de l'élément de transmission sans fin (12) comprend un guidage de produit au moins sur un côté longitudinal adjacent au moyen de transport contigu.

11. Convoyeur pour transporter et accumuler des produits distincts entre une entrée et une sortie, comprenant un premier moyen de transport (7) se déplaçant à partir de l'entrée dans une première direction et étant entraînable avec une première vitesse et un second moyen de transport (8) se déplaçant dans une seconde direction opposée à la sortie et étant entraînable avec une seconde vitesse, lesdits premier et second moyens de transport s'étendant, au moins partiellement, de façon sensiblement parallèle l'un à l'autre, et comprenant en outre un élément de transfert mobile (11) pour transférer des produits entre les premier et second moyens de transport, **caractérisé en ce que** ledit élément de transfert est connecté à un entraînement stationnaire (27, 28) qui est couplé de façon opérationnelle aux premier et second moyens de transport afin de se déplacer à une vitesse qui dépend de la vitesse des premier et second moyens de transport, ledit élément de transfert comprenant un guidage entraînable (16) pour guider et déplacer des produits au cours de leur transfert, ledit guidage comprenant une transmission (20 à 25) en prise entraînée avec seulement un desdits premier et second moyens de transport.

12. Convoyeur selon la revendication 11, dans lequel les premier et second moyens de transport (7, 8) sont au moins partiellement guidés dans un passage hélicoïdal autour d'une colonne de cadre (1) coaxiale avec le passage hélicoïdal des premier et second moyens de transport, l'entraînement stationnaire comprenant un bras (27) connecté de façon rotative à la colonne (1) et étant entraînable par un moteur (28).
